# EUROPEAN PATENT SPECIFICATION

(11) **EP 3 461 969 B1**
(45) Date of publication and mention of the grant of the patent: **28.10.2020**
(21) Application number: 18197151.6
(22) Date of filing: 27.09.2018
(51) Int. Cl.: E04F 13/08, B21D 39/06, B21D 39/20, B21D 53/08, B23P 11/00

(54) **ARRANGEMENT AND METHOD FOR MANUFACTURING A FACADE LOUVER, PULLING UNIT AND PULL HEAD**
ANORDNUNG UND VERFAHREN ZUR HERSTELLUNG EINER FASSADENBLENDE, ZIEHEINHEIT SOWIE ZIEHKOPF
AGENCEMENT ET PROCÉDÉ DE FABRICATION D'UN VOLET DE FAÇADE, UNITÉ DE TRACTION, ET TÊTE DE TRACTION

(30) Priority: 27.09.2017 FI 20175859
(43) Date of publication of application: 03.04.2019
(73) Proprietor: Alupro OY, 04360 Tuusula (FI)
(72) Inventor: Samela, Vesa, 04600 Mäntsälä (FI); Raumanni, Heikki, 04360 Tuusula (FI)
(74) Representative: Papula Oy

(56) References cited:
- EP-A1- 2 596 879
- WO-A1-91/02922
- CN-U- 203 751 166
- DE-A1- 3 545 554
- US-A- 3 824 668

## Description

### FIELD OF THE INVENTION

The invention relates to an arrangement and to a method for manufacturing a facade louver. Further, the invention relates to a pulling unit and to a pull head for expanding a pull pipe of a facade louver.

### BACKGROUND OF THE INVENTION

Facade louvers are widely used in various, mostly public, buildings as a surface structure for the walls to give a specific look for the wall, and/or to protect the wall against direct sunlight or rain and wind. Louvers are also widely used for example in parking halls as the sole wall structure to give protection against weather, but still allow the air to flow freely in the parking floors.

However, the manufacture of louvers is expensive and slow because of the current manufacturing methods. The slats are cut to a proper size, and are welded from their ends to common frames with a desired even spacing. When the frame looks ready, it must be smoothed and cleaned, and then surface-treated, such as painted, in a desired colour. If the slats were already painted before welding, it would still be necessary to smooth and paint the weld seams; however, repainting the seams only would make the louver look untidy. Thus, the surface-treatment has to be given to the finished louver, which is, however, a complicated and difficult task because of the surface differences of the louver.

In addition, in the prior art solutions securing the slats to the frame is slow and takes a lot of space because of the different manufacturing steps.

WO 91/02922 A1 discloses an arrangement and method for manufacturing facade louvers by shrinking tubes around bars passing through, and either side of parallel slats of the louver.

DE 35 45 554 A1 discloses connecting pipes to a heat exchanger by expanding the pipes at their intersection with a wall of the exchanger using an arrangement which pulls an expandable pull head through the pipes.

### OBJECT OF THE INVENTION

The object of the invention is to mitigate or remedy at least one of said defects of the prior art. Specifically, the object of the invention is to disclose a new arrangement and method for manufacturing a facade louver.

### ADVANTAGES ACHIEVED WITH THE INVENTION

The arrangement and the method for manufacturing a facade louver according to the invention advantages over the prior art. The invention enables the manufacture of the facade louver without welding as usual. The invention also obviates the need for smoothing, cleaning and painting the welded louver. Just machining the parts and assembling them, whereby the amount of work needed for manufacturing the louver may drop even to 10-20 % from the prior art. Furthermore, the end result looks much tidier and more finished, because no weld seams or other traces from machining are visible in the louver.
The device according to the invention also enables facade louvers of different sizes and varying dimensions to be manufactured with a single device. The facade louver may be assembled and completed in a single work station. Moving a semi-finished louver may thus take less time, workforce and space. In addition, certain embodiments may enable more than one facade louver to be manufactured simultaneously, or partly simultaneously.
Furthermore, the method enables the facade louver to be manufactured such that it will not be deformed due to internal stresses, and so the stages of correcting the deformations may also be avoided. Thus, the louver may also be easier to be installed in place, whereby time and workforce may also be saved during installation. In addition, the facade louver manufactured with the method and the device according to the invention may be more durable in use, because the fatigue of the material due to internal stresses may be reduced.

### SHORT DESCRIPTION OF THE DRAWINGS

The invention will now be described in detail with reference to the accompanying drawings, in which
Fig. 1 illustrates a facade louver to be assembled with the method and the device according to the invention.
Fig. 2 shows one embodiment of the arrangement according to the invention;
Fig. 3 illustrates the manufacture of a facade louver using the arrangement according to the invention;
Fig. 4 illustrates the manufacture of a facade louver using the arrangement according to the invention;
Fig. 5 shows one embodiment of a pulling unit and a control arrangement of the pulling unit according to the invention;
Fig. 6 shows one embodiment of a pulling unit and a control arrangement of the pulling unit according to the invention as seen from the direction of the pulling unit;
Fig. 7 illustrates a detail of one embodiment of a pull head according to the invention; and
Fig. 8 shows another detail of one embodiment of a pull head according to the invention.

### SUMMARY OF THE INVENTION

In one aspect, the invention relates to an arrangement for manufacturing a facade louver. The arrangement is intended for the manufacture of a facade louver comprising a number of parallel slats spaced at a distance from each other, and at least one pull pipe extending through holes arranged in the slats in order to connect the slats. The arrangement comprises a pulling unit for expanding the pull pipe of the louver, a control arrangement of the pulling unit, and a stand for supporting the facade louver being manufactured during the manufacturing process. The arrangement is characterized in that the pulling unit comprises a winch, a pulling means retractably connected to the winch, and a pull head that is attachable to the pulling means; and the winch is movable and lockable in place by means of the control arrangement of the pulling unit.

The number of the pull pipes arranged in the facade louver that is manufactured using the arrangement and the method may vary, for example depending on the size of the louver and its required stiffness. It is possible that the louver has, for example, 1, 2, 3 or 4 pull pipes. There may also be more pull pipes, for example 6. For example, it is possible to manufacture a louver having two pull pipes that are both arranged inside end frames. It is also possible to manufacture a louver having one, two or three pull pipes in addition to the pull pipes that extend inside the end frames.
Also louvers having no end frames can be manufactured with the arrangement and the method according to the invention. For example, it is possible to manufacture a louver having one central pull pipe. Alternatively, it is possible to manufacture a louver having two or three pull pipes that are not arranged inside end frames.

The number of the pull pipes, as well as the width and height of the facade louver and their respective ratios may vary. By the arrangement and the method according to the invention it is possible to manufacture facade louvers sized as e.g. 1 m × 1 m, 0.5 m × 1 m, 4 m × 4 m, 1 m × 4 m or 2 m × 2 m. In other words, the width and height of the louvers being manufactured may independently vary in the range of 0.5 m - 4 m.

Preferably, slats that all have the same cross-sectional profile are used in the method according to the invention. Thus, due to the identical slats and the identical holes in the end frames the manufacture of the louver is simple and fast.
In addition to one or more pull pipes, the facade louver may be supported by means of end frames arranged at the ends of the slats, or by corresponding support structures on which the slats are supported so that a rigid assembly is formed. The end frames of the louver can be connected either from their upper or lower ends or both to each other by means of horizontal frames. Thus, they form a framing that supports from all sides the slats arranged in the rectangular space between the frames, the slats being secured in place from both ends by means of openings that have been made at the ends of the slats and by the pipe that is pushed through the openings.
Preferably the end frame, the pull pipe and the slats are positioned relative to each other so that the pipe that is pushed through the holes practically comes into contact with the outer surface of the end frame. This ensures a very firm and reliable connection between different parts.
The pull pipe may be manufactured from aluminium. Alternatively the pull pipe may be manufactured from stainless steel or alloys of various metals. Preferably the pull pipe does not have seams, such that the friction exerted on the pull head may be equally strong in all directions. The diameter of the pull pipe and its wall thickness may vary. For example, a pipe with a total diameter of 10, 12 or 15 mm before expanding may be used. Also pipes with a thicker total diameter, for example 20 or 25 mm, may be suitable for use. The wall thickness of the pipe before expanding may be 1 mm - 5 mm, e.g. 2 mm. By means of the arrangement and the method according to the invention, the outer diameter of the pull pipe is permanently expanded. In other words, the expansion is not reversible.
In a second aspect, the invention relates to a pulling unit for expanding a pull pipe connecting the slats of a facade louver. The pulling unit is characterized by the features of claim 16 and comprises a winch, a pulling means retractably connected to the winch, and a pull head that is attachable to the pulling means. In addition, the winch is movable and lockable in place, and the pulling unit is configured to operate in the arrangement according to the invention.
The pulling unit comprises a winch, a pulling means and a pull head. In addition to a spool, the winch may comprise, e.g., an electric motor, a drive shaft, a gearbox and a clutch, and other devices used in the field for operating or controlling the operation of a winch.
The winch may also comprise a frequency changer, which allows different operating speeds for the winch by changing the rotating speed of the spool. The pulling unit may be operated at different speeds. The pulling speeds may vary in the range of 0.2 m - 20 m s⁻¹. For example, the speeds of 0.5, 1 and 5 m s⁻¹ may be suitable. Also higher speeds, such as 10 or 15 m s⁻¹ may be used. In one embodiment the arrangement is characterized in that the winch comprises a winching speed control. The operating speed may thus be adjusted for each facade louver that is manufactured.
As the winch according to the invention is movable and lockable in place with the control arrangement of the pulling unit, the facade louver that is manufactured may be assembled in the stand according to the invention, and does not have to be moved during the manufacturing process. Moving the pull head to the next pull pipe for expanding is done by moving the winch. Moving of the winch to the next pull pipe may preferably be automatized by feeding the structural details of the facade louver that is manufactured to a computer that controls the control arrangement of the pulling unit. Preferably, also expansion of the pull pipe may be automatized by arranging the stand such that the pull head is directed into the pipe without an operator.

According to the invention, the control arrangement of the pulling unit is arranged to enable the moving of the winch in both horizontal and vertical directions. The control arrangement may be movably mounted to the stand. For example, the control arrangement may comprise a liftable and lowerable base moving on wheels, the winch being mounted to the base. Alternatively, the winch may be mounted to the stand by means of the control arrangement, for example on rails. The control arrangement may be integrated with a stationary support beam of the stand.

The pulling means must be sufficiently strong so that it withstands the pull needed in the method of manufacturing a facade louver, and that the expansion of the metal pipe would succeed. The minimum pull that the pulling means should withstand is several tens of kilos, for example 50 kg - 150 kg. During the expansion of the pull pipe the pull may vary, and it may momentarily be greater than the average by several tens of kilos. The pull needed for expanding the pull pipe depends, for example, on the wall thickness of the pull pipe and on the extent to which the pull pipe is expanded.

In one embodiment the arrangement is characterized in that the pulling means is a wire or a metal band. A wire is often round in cross-section, while a metal band is often flat. The wire may be a metal wire. The cross-sectional profile of the metal band may affect the moving flexibility of the band in the pipe, for example when the pull head is being pushed through the pull pipe. For example, a metal band with a convex cross-section may have advantageous properties in view of the arrangement according to the invention.
The pull head is the element that expands the pull pipe. The pull head is intended to move inside the pull pipe, but the diameter of the pull head in its largest dimension is slightly larger than the inner diameter of the pipe that is expanded. For example, a suitable cross-section of the pull head may be 10.4 mm - 10.7 mm for a pipe with an outer diameter of 12 mm. A suitable ratio of the diameters is determined e.g. by the wall thickness of the pull pipe, the material being used, and the degree of force exerted on the pipe for expanding. Typically the pull head comprises a part that is round in cross-section and thicker than the rest of the pull head. The friction between the pull head and the pull pipe is thus uniform, and the pull pipe is evenly expanded in all directions. This may in turn have the effect that the pull pipe, and so the facade louver that is manufactured, does not twist but stays straight. The thickest dimension of the pull head may be calculated for example such that the outer diameter of the pull pipe increases by 0.3 mm - 0.8 mm, for example by 0.5 mm. The pull head will be subject to wear during use, and must be replaced from time to time.

In one embodiment the arrangement is characterized in that the pulling means is arranged to be so long that the pull head may be pulled in by at least 2 m, or by at least 4 m. In other words the pulling means, such as a wire or a metal band, is so long that its moving distance applicable for expanding the pull pipe may be at least 2 m or at least 4 m. This allows the expansion of pull pipes having a corresponding length. For example, it is possible to expand a pull pipe having a length exceeding 2 m or exceeding 4 m, such as a pull pipe having a length of 4.3 or 4.5 m. The total length of the pulling means depends on the details of the arrangement according to the invention, particularly of the winch and its location.

In one embodiment the arrangement is characterized in that the pulling unit comprises an abutment element for the pull pipe for abutting against the pull pipe while the pull head is being pulled with the pulling means inside the pull pipe. The abutment element is typically a piece manufactured from a metal that is harder than aluminium, such as steel, and that is sized such that the pulling means, such as a wire or a metal band, is able to pass through it, but that the pull pipe stops at the abutment element. For example, the abutment element may comprise a pipe or a channel that is wider than the diameter of the pulling means, but narrower than the outer diameter of the pull pipe. Typically the abutment element is mounted to the winch or forms a part of the external structure of the winch.
The abutment element may provide the only support needed for the pull pipe during expanding. This may facilitate the manufacture of a stress-free louver, because the pull pipe may become shorter during expansion. The amount of shortening may be proportional for example to the length of the pull pipe, whereby a longer pipe shortens to a greater extent. Because the pull pipe may move with respect to the slats around which it has not yet expanded, shortening may particularly occur at the end of the pull pipe that is closer to the winch, i.e. in the part that has not yet been secured against the slats. It may thus be preferred that the pull pipe is not attached to any kinds of holders, but only abuts against the abutment element, such that the force exerted by the pull head in the direction of the abutment element holds the pull pipe in the correct position. It is possible that the holes arranged in the same position in the slats assist in maintaining the correct position of the pull pipe.

In one embodiment the arrangement is characterized in that the pulling means is arranged to pull the pull head in the horizontal direction. The winch is preferably arranged to pull the pull head in alignment with the pull pipe that is expanded. This may be advantageous for even expansion. However, the whole arrangement may also be arranged at an angle that differs from the horizontal direction.

The arrangement according to the invention comprises a stand for supporting the facade louver being manufactured during the manufacturing process. The stand comprises support beams for supporting the facade louver during manufacture. The support beams may be provided with different types of holders for supporting and/or holding the slats in place, or for example for supporting and/or holding the end frames in place. The stand may be provided with support beams having different lengths.
The support beams are intended to mean elongated means on which the slats or end frames of the facade louver are mounted directly or by means of holders. The support beams may be provided with different types of mounting configurations on which they rest in a fixed position or are movable. The mounting of the support beams as such may be movable or fixed. Each of the support beams may have a separate mounting, or a specific mounting may support two or more of the support beams. The movable support beams may be placed on wheels or rollers. Alternatively, the movable support beams may move on rails or guides.

In one embodiment the arrangement is characterized in that the stand comprises at least one horizontal fixed support beam, and at least one horizontally movable horizontal support beam. In many embodiments at least one, in some embodiments the only fixed support beam extends transversely to the orientation of the slats of the facade louver that is manufactured, when the components of the louver are assembled in the stand of the arrangement according to the invention. The pull pipes thus extend parallel to the fixed support beam and the slats.
The pulling unit is moved in this arrangement transversely relative to the orientation of the fixed support beam in order to move from one pull pipe to the next. The pulling unit may have a separate support structure, or it may be attached to the mounting of the support beams. The fixed support beam or its mounting may comprise guides or rails for the control arrangement of the pulling unit.
In some embodiments, the arrangement comprises one fixed support beam and two or more movable support beams. It is also possible that the stand comprises at least two fixed support beams, either parallel or at right angles to each other. For example, stands comprising three or four fixed support beams are possible. In all cases the stand may comprise, in addition to the fixed support beams, also movable support beams. If there are four fixed support beams, they may form a rectangle defining the outer dimensions of the stand.

The number of the movable support beams may vary. The stand may comprise at least two, or at least four movable support beams. In one embodiment the arrangement is characterized in that the stand comprises at least two horizontally movable support beams. The moving directions of the two movable support beams may be at right angles to each other. Alternatively their moving directions may be the same. In some embodiments there are several parallel support beams extending in the direction of the pull pipes of the louver arranged in the stand. The distance between the support beams may thus be adjusted according to the width of the louver that is manufactured. If there are four of more of such parallel movable support beams, two or more louvers may correspondingly be assembled at the same time.

In one embodiment the arrangement is characterized in that the stand comprises at least one slat holder for defining the distance between the slats and for holding the slats during the manufacture of the louver. The holder may be replaceable, whereby a suitable holder may be used with slats having different thicknesses and spacings. The holder may also be configured to work for example with the end frame, such that the end frame is secured to the holder and the slats are secured to the end frame.

In one embodiment the arrangement is characterized in that at least one of the support beams of the stand is 1-5 meters long. The stand has typically at least two support beams having a length of, for example, more than 3 meters, or more than 4 meters. Longer support beams imply a larger stand. This may in turn allow both larger separate facade louvers to be manufactured, and more than one facade louver to be manufactured partly or entirely at the same time. However, smaller tables in which the length of the support beams is 1-2 meters, or 1-3 meters, may be best suited for some embodiments.

Because the holders are adjustable, it may be possible that louvers that are manufactured partly or entirely side by side have a different slat profile and/or spacing. When it is possible to arrange more than one facade louver for manufacture in the stand, the arrangement according to the invention allows the assembly of one louver with the pulling unit, while one or more other louvers are being assembled in the stand from their components. This way the use of the pulling unit is particularly efficient.
In one embodiment of the arrangement according to the invention the arrangement comprises two or more pulling units. This may allow the manufacture of two or more facade louvers completely side by side. Alternatively the manufacture of a single louver, particularly one comprising several pull pipes, may become quicker when two or more pull pipes may be expanded at the same time.
If the arrangement comprises two or more pulling units, each of them may have a separate control arrangement, or one control arrangement may be at least partly shared by two of the pulling units. For example, more than one pulling unit may move on the same rails.
In a third aspect, the invention relates to a pull head for expanding a pull pipe connecting the slats of a facade louver. The pull head is characterized by the features of claim 17 and comprises an expanding element and an expandable element having a round cross-section, the elements disposed with respect to each other in a movable manner, such that when the pull head is being pulled with the pulling means inside the pull pipe, the expanding element reversibly expands the expandable element, and the pull head is configured to operate in the arrangement according to the invention.

The diameter of the pull head is reversibly expandable. The expansion of the pull head is intended to mean that the largest dimension around the pull head increases. Reversible expansion is intended to mean that the pull head may be switched between larger and smaller diameter configurations. In the larger diameter configuration the pull head is larger than the inner diameter of the pull pipe. In the smaller diameter configuration the pull head is so much smaller than the inner dimeter of the pull pipe that it may be pushed by means of the pulling means through the pull pipe.
Preferably the reversible expansion of the pull head is arranged such that the diameter of the pull head expands automatically when the pull head is pulled through the pull pipe towards the winch. Alternatively the pull head may be replaced between a wider and a thinner configuration. For example, this may be implemented using different types of screw or sleeve arrangements. It is possible that the user is able to define the configuration of the pull head. The advantage of the reversibly expandable pull head is that the pulling means may be pushed, and after that pulled, through the pull pipe without detaching the pull head so as to expand the pull pipe during the pull. The manufacture of the louver is this way efficient because the time spent for attaching and detaching the pull head will be saved. In addition, the user may be able to control the arrangement according to the invention by means of the pulling unit.
If the diameter of the pull head is permanently larger than the inner diameter of the pull pipe, the pulling means must be pushed through the pipe without the pull head, and the pull head is attached for each expanding pull to the pulling means. This embodiment may also be applicable in some situations.

In one embodiment the arrangement is characterized in that the pull head is attachable to the end of the pulling means. Depending on the structure of the pulling means, it may be possible also to attach the pull head to other parts than right at the tip of the pulling means. Preferably the pull head is attached at a distance of no more than 100 mm or 200 mm from the moving end of the pulling means.

The pull head comprises an expanding element and an expandable element having a round cross-section, the elements disposed with respect to each other in a movable manner, such that when the pull head is being pulled with the pulling means inside the pull pipe, the expanding element reversibly expands the expandable element. The expansion of the pull head may be caused by the combined effect of friction due to pulling and the shape of the elements of the pull head. In this case the expansion of the pull head depends on the moving direction of the pull head, such that the expansion only occurs during pulling of the pull head inside the pull pipe. During pushing, no expansion takes place, even if there was also friction in this direction between the pull pipe and the pull head.

The expanding element comprises a conical part arranged such that the tapered end of the conical part points towards the winch when the pull head is being pulled with the pulling means inside the pull pipe, the conical part being thus forced at least partly inside the expandable element so as to reversibly expand the expandable element. In other words, the movement of the expandable element may slow down or stop due to friction when the pulling means pulls the pull head in the pull pipe. Because the expandable element and the expanding element are disposed with respect to each other in a movable manner, the expanding element may continue moving, such that it moves closer to the expandable element. As a result, the conical part moves inside the expandable element up to a diameter that is as large as the inner diameter of the expandable element. The expandable element is formed such that when the conical part continues to move inside the expandable element, the shape of the expandable element adapts accordingly by expanding. The expandable element and/or the expanding element may be provided with structures that stop these elements from moving relative to each other when the expandable element has reached a predetermined outer diameter. This results in a predetermined increase of the diameter of the pull pipe, while on the other hand it is possible to avoid excessive wedging together of the elements of the pull head, which could lead to jamming of the pull head in the wider configuration. When the pull head has expanded to a predetermined size, the entire pull head moves inside the pull pipe at a speed defined by the winch winding speed. The winch winding speed may be adjusted to be slower at the beginning of pulling and to speed up after the beginning.

The expandable element comprises a sleeve at least partly enclosing the expanding element, and the expandable element has an expanding-element-side edge with cuts extending from the edge, the cuts allowing the expansion of the expandable element when the conical part of the expanding element is being forced inside the expandable element. The length of the sleeve, the cuts and the expanding element may be defined based on the target amount of expansion of the pull pipe, the inner diameter of the pull pipe as well as the materials being used. The sleeve may preferably have a thicker part with a curved surface for expanding the pull pipe.
In one aspect, the invention relates to a method for manufacturing a facade louver. In the method, at least one hole is first machined in slats that have been cut to a predefined size and to the same length, in the same position in each of the slats. After that the slats are placed in a stand of the arrangement according to the invention, securing the slats by means of end frames that are also placed in the stand and/or by means of slat holders of the stand. Next, a pull pipe is pushed through the holes arranged in the same position in each of the slats, the outer diameter of the pull pipe corresponding to the diameter of the holes in the slats. By driving a winch of the arrangement according to the invention in an outward direction, a pull head attached to a pulling means is pushed through the pull pipe, and the pull head is pulled through the pull pipe by driving the winch in an inward direction, whereby the pull head expands larger than the inner diameter of the pull pipe so as to expand the pull pipe in the areas between the slats, and in the area of the slat to tighten the pipe against the slat, so that the slat is immovably locked around the pull pipe.
In embodiments where end frames are used, openings corresponding to the cross-sectional profile of the slats are machined in the method in both of the end frames at a specified distance from each other. The openings are made nearly without play, i.e. so precisely to correspond to the cross-section of the slat that the slat may just be pushed through the opening. The slats provided with holes are pushed from their ends through the openings of the end frames, so that the holes machined in them pass through the openings. The pull pipe is inserted and expanded as described above. Preferably, at the same time as the slats become rigidly set in their place, they also become locked in the openings of the end frame, i.e. the end frame, the slats and the pipe together form a rigid and stable assembly without any welding or corresponding joining operations.

The holes may be machined in the slats at a uniform distance from the end of the slat, or the holes may be machined in the slats so that they extend partly beyond the ends of the slats, such that the centre of the hole in the slat is spaced from the end of the slat at a distance smaller than the radius of the hole. The rigid slat will be locked against the rigid pipe, even if part of the hole extends beyond the slat. This way the slats can be made shorter, i.e. the material costs are lowered, and also the frame profile surrounding the louver can be made smaller in diameter, as the end of the slat requires less space.

With the method according to the invention it is possible to make the slats and the frame parts from precoated metal profiles, such as aluminium profiles. Whatever the type and material of the coating, it will not be changed or damaged when different parts of the louver are assembled according to the invention. It is also possible to use uncoated material, i.e., for example clear aluminium profiles; however, in this case it is more advantageous to coat, such as paint, these parts before assembling them according to the invention, either in the form of long rods or in the form of parts cut to a fixed size.

### DETAILED DESCRIPTION OF THE FIGURES.

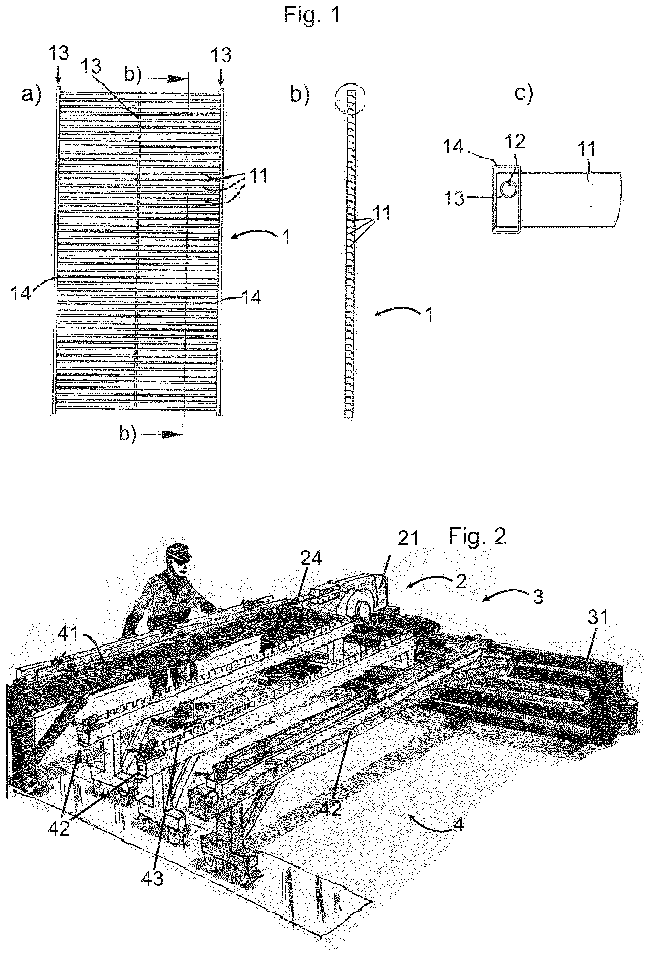

Fig. 1 illustrates an example of a facade louver 1 that may be manufactured with the arrangement and the method according to the invention. The louver is formed by a number of parallel slats 11 that are secured from their ends to end frames 14. In this embodiment, the end frame 14 is formed by a closed rectangular profile. The end frame 14 is provided with evenly spaced openings (not shown), corresponding in size and shape to the cross-sectional shape of the slats 11 as accurately as possible. Thus, as the slat 11 is pushed into the opening of the end frame, the slat 11 fills the opening precisely, substantially without play, and in a close-fitting manner.

As indicated by section b-b of Fig. 1, i.e. view b) of Fig. 1, it can be seen that in this example the slats 11 are in the same position, and are spaced at the same uniform distance from each other. As can be seen from view c) 4 of Fig. 1, there is a hole 12 at the end of each of the slats 11, i.e. in proximity to the end of the slat. The slat 11 is pushed into the end frame 14, such that the holes 12 are inside the profile forming the end frame 14, and are in alignment with each other. A pull pipe 13 is then pushed through these holes 12, the outer diameter of the pull pipe corresponding closely to the diameter of the holes 12. For example, the pull pipe 13 used may be an aluminium pipe, which is suitably and relatively easily formable. Also other metals, such as steel may be possible materials for the pull pipe 13.

When the slats 11 and the pull pipe 13 are inserted in place in the profile formed by the end frame 14, a suitable pull head 23 is pulled through the pipe 13, the pull head being an object with a slightly larger diameter than the inner diameter of the pull pipe. The pull head expands the pull pipe 13 in the area between the slats 11, and in the area of the slats 11 it tightens the pull pipe 13 against the slats 11.
In the example of Fig. 1 the facade louver 1 comprises also a pull pipe 13 in the middle of the louver 1, this pull pipe being correspondingly secured by pulling the pull head 23 through the pipe.

Fig. 2 shows one embodiment of the arrangement according to the invention. A pulling unit 2 comprising a winch 21 and an abutment element 24 for the support pipe are illustrated. The arrangement also comprises a control arrangement 3 of the pulling unit for moving and locking the pulling unit in place. The control arrangement further comprises a support structure 31 on which the pulling unit moves. In addition, rails are mounted to the support structure for support and movement of movable support beams 42. The arrangement of Fig. 2 comprises one fixed support beam 41. The arrangement also comprises three movable support beams 42. The movable support beams 42 are supported from one end on wheels and from the other end on rails.

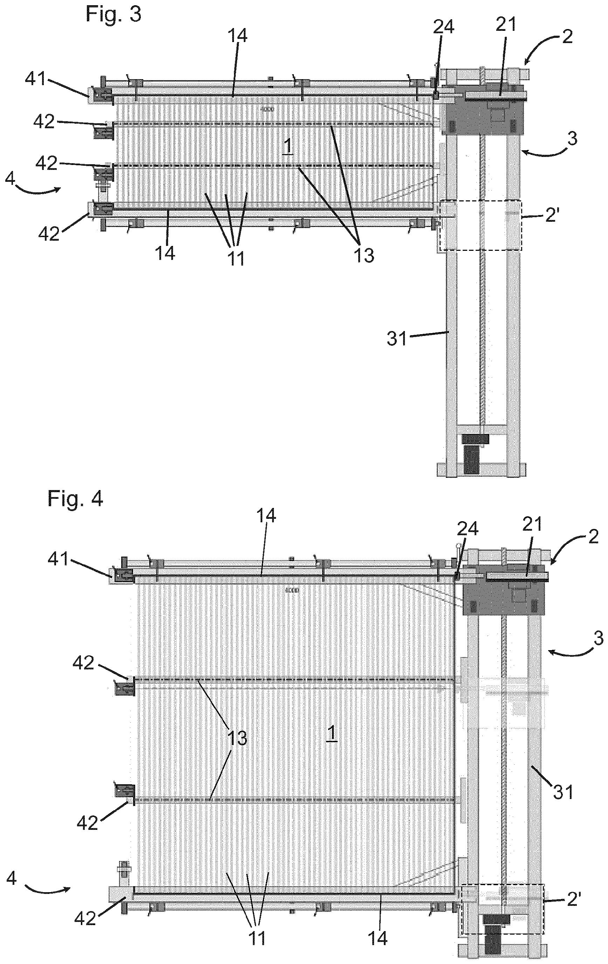

Fig. 3 and 4 illustrate the manufacture of a facade louver 1 with the arrangement according to the invention. The figures show the arrangement as seen from above. In the arrangements of Fig. 3 and 4, a stand 4 comprises one fixed support beam 41 and three movable support beams 42. The facade louver 1 with numerous slats 11 is supported on the beams. The louver of Fig. 3 is narrow, such that only about a third of the width of the arrangement is being used. The louver 1 of Fig. 4, however, is so wide that it takes up the whole width of the arrangement to support it. In both cases the louver 1 could also be shorter. The louvers 1 illustrated in the figures are provided with end frames 14. Inside the end frames there is a pull pipe 13, not shown in the figures. In both of the figures, however, there are also two pull pipes 13 extending in the middle of the louvers 1 (indicated with a dashed line). The figures also show that the distance between the pull pipes may vary in different louvers 1. Although the louvers 1 of the embodiments of Fig. 3 and 4 are supported at each of the pull pipes 13 by a support beam 41, 42, this is not necessary. The method may as well be implemented using an arrangement where at least one support pipe is expanded at an unsupported part of the louver 1.
Fig. 3 and 4 also show a pulling unit 2 according to the arrangement. The pulling unit includes a winch 21 and an abutment element 24 for the support pipe. A control arrangement 3 comprises a support structure 31 along which the pulling unit is movable to each of the pull pipes that are expanded. In Fig. 3 and 4, the pulling unit is illustrated right at the side of the arrangement at an end frame. The location of the pulling unit 2 on the other side is indicated with a dashed line 2'.

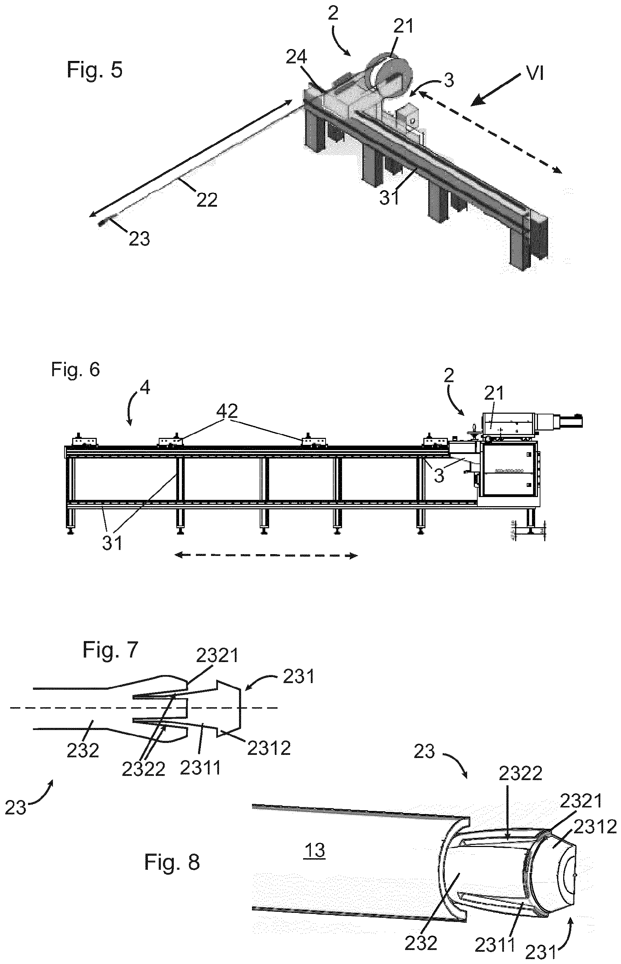

Fig. 5 shows one embodiment of the pulling unit 2 and the control arrangement 3 of the pulling unit according to the invention. For clarity reasons, the stand 4 is not illustrated.
A winch 21, a pulling means 22, and a pull head 23 are shown in the pulling unit 2. Also an abutment element 24 for a pull pipe, against which abutment element the pull pipe 13 abuts when the pull head 23 is being pulled through the pull pipe 13, is illustrated. A double-headed solid arrow indicates the moving direction of the pull head when the arrangement is being operated, the head pointing towards the winch being the pulling direction and the head pointing away from the winch being the pushing direction.
The control arrangement 3 of the pulling unit is partly located on the side and partly under the winch 21. These are the areas where means for moving the winch are located. In addition, the figure shows a support structure 31 of the control arrangement, the support structure comprising a mounting and rails along which the winch may move. The movement effected by means of the rails is indicated with a double-headed dashed-line arrow. In addition, it is possible that the pulling unit 2 is movable in the direction of the pull pipe 13 that is expanded. In other words, the pulling unit 2, particularly its winch 21 and/or abutment element 24 for the pull pipe may move closer to the stand 4 or farther away from the stand. It is also possible that the control arrangement 3 of the pulling unit is integrated with the stand 4.

Fig. 6 shows one embodiment of the pulling unit and the control arrangement of the pulling unit according to the invention as seen from the direction of the pulling unit (arrow VI in Fig. 5). The ends of the support beams 41, 42 of the stand 4 and the winch 21 of the pulling unit 2 are shown in the figure. In addition, the figure shows the control arrangement 3 of the pulling unit. The support structure 31 of the control arrangement comprises two horizontal supports, wherein both or just one of them may have a rail for moving the pulling unit 2 transversely in the figure (indicated with a double-headed dashed-line arrow). In addition, the control arrangement 3 may comprise rails for moving the pulling unit vertically and horizontally closer to or farther away from the stand 4. These structures are not indicated in the figure, because they are located behind the pulling unit 2 in the viewing direction of the figure.

Fig. 7 illustrates a detail of one embodiment of the pull head 23 according to the invention. The dashed line indicates the moving direction of the pull head 23 during use. The means by which the pull head 23 is attached to the pulling means 22, such as a wire or a metal band, are not indicated, because their implementation is within the competence of a person skilled in the art. The pull head 23 comprises an expanding element 231 and an expandable element 232 that are connected to each other in a movable manner. The movability may be limited to the direction of the longitudinal axis of the expanding element 231 and the expandable element 232. The expandable element 232 may surround the expanding element 231 in a concentric manner. For example, the expanding element 231 may extend through the full length of the expandable element 232 as a bar that is attached to the pulling means 22. The end of the expanding element 231 on the side of the pulling means 22 may comprise a thicker part or a thickening that sets a limit for the movement of the expandable element 232 along the expanding element 231 in the direction of the pulling means 22.
In the embodiment of Fig. 7 the expanding element 231 comprises a conical part 2311 and a stopping part 2312 that sets a limit for the movement of the expandable element 232 along the conical part 2311 in the direction away from the pulling means 22. The expandable element 232 comprises an edge 2321, and cuts 2322 extending from the edge into the expandable element. When the conical part 2311 is being forced inside the expandable element 232, the cuts 2323 allow reversible expansion of the expandable element 232. In Fig. 7 the cuts 2322 of the expandable element are depicted as being open in order to illustrate the operating mechanism of the pull head 23; however, the cuts 2322 may be fully or nearly closed when the conical part 2311 is outside of the expandable element 232.

Fig. 8 shows a detail of one embodiment of the pull head according to the invention. The figure illustrates the pull pipe 13 into which the pull head 23 is going. The conical part 2311 of the expanding element 231 has been forced fully inside the expandable element 232 up to the stopping part 2312, such that the diameter of the pull head 23 is slightly larger than the inner diameter of the pull pipe 13. The edge 2321 of the expandable element and the cuts 2323 allowing the expansion of the expandable element 232 are also illustrated in the figure.

The invention has been described above by way of example, with reference to the accompanying drawings, without in any way limiting the invention exclusively to the structures presented herein. Different embodiments of the invention are possible within the scope defined by the claims.

## Claims

1. An arrangement for manufacturing a facade louver (1) comprising a number of parallel slats (11) spaced at a distance from each other, and at least one pull pipe (13) extending through holes (12) arranged in the slats in order to connect the slats, the arrangement comprising
- a pulling unit (2) for expanding the pull pipe (13) of the louver;
- a control arrangement (3) of the pulling unit; and
- a stand (4) for supporting the facade louver being manufactured during the manufacturing process, the arrangement being **characterized in that**
- the pulling unit (2) comprises a winch (21), a pulling means (22) retractably connected to the winch, and a pull head (23) that is attachable to the pulling means; and
- the winch (21) is movable and lockable in place by means of the control arrangement (3) of the pulling unit.

2. The arrangement according to claim 1, **charac**- **terized** in that the control arrangement (3) of the pulling unit is arranged to enable moving of the winch (21) in both horizontal and vertical directions, and/or that the control arrangement is movably mounted to the stand (4).

3. The arrangement according to claim 1 or 2, **characterized in that** the stand (4) comprises at least one horizontal fixed support beam (41), and at least one horizontally movable horizontal support beam (42).

4. The arrangement according to any one of the preceding claims, **characterized in that** the stand (4) comprises at least two horizontally movable support beams (42), the moving directions of which are at right angles to each other, or the moving directions of which are the same.

5. The arrangement according to any one of the preceding claims, **characterized in that** the stand (4) comprises at least one slat holder (43) for defining the distance between the slats and for holding the slats during the manufacture of the louver.

6. The arrangement according to any one of the preceding claims, **characterized in that** at least one of the support beams (41, 42) of the stand (4) is 1-5 meters long.

7. The arrangement according to any one of the preceding claims, **characterized in that** the pulling unit (2) comprises an abutment element (24) for the pull pipe (13) for abutting against the pull pipe while the pull head (23) is being pulled with the pulling means (22) inside the pull pipe (13).

8. The arrangement according to any one of the preceding claims, **characterized in that** the pulling means (22) is a wire or a metal band.

9. The arrangement according to any one of the preceding claims, **characterized in that** the pulling means (22) is arranged to be so long that the pull head (23) may be pulled in by at least 2 m, or by at least 4 m.

10. The arrangement according to any one of the preceding claims, **characterized in that** the winch (21) comprises a winching speed control (211).

11. The arrangement according to any one of the preceding claims, **characterized in that** the pull head (23) is attachable to the end of the pulling means (22).

12. The arrangement according to any one of the preceding claims, **characterized in that** the diameter of the pull head (23) is reversibly expandable.

13. The arrangement according to claim 12, **char**- **acterized** in that the pull head (23) comprises an expanding element (231) and an expandable element (232) having a round cross-section, the elements disposed with respect to each other in a movable manner, such that when the pull head (23) is being pulled with the pulling means (22) inside the pull pipe (13), the expanding element (231) reversibly expands the expandable element (232).

14. The arrangement according to claim 13, **char**- **acterized** in that the expanding element (231) comprises a conical part (2311) arranged such that the tapered end of the conical part points towards the winch (21) when the pull head (23) is being pulled with the pulling means (22) inside the pull pipe (13), the conical part being thus forced at least partly inside the expandable element (232) so as to reversibly expand the expandable element (232).

15. The arrangement according to claim 14, **char**- **acterized** in that the expandable element (232) comprises a sleeve at least partly enclosing the expanding element (231), and the expandable element has an expanding-element-side edge (2321) with cuts (2322) extending from the edge, the cuts allowing the expansion of the expandable element when the conical part (2311) of the expanding element is being forced inside the expandable element.

16. A pulling unit (2) configured to operate in the arrangement according to any of claims 1-15 for expanding a pull pipe (13) connecting the slats of a facade louver (1), **characterized in that** the pulling unit (2) comprises a winch (21), a pulling means (22) retractably connected to the winch, and a pull head (23) that is attachable to the pulling means; the winch being movable and lockable in place with a control arrangement (3), wherein the control arrangement is arranged to enable the moving of the winch in both horizontal and vertical directions.

17. A pull head (23) configured to operate in the arrangement according to any of claims 1-15 for expanding a pull pipe (13) connecting the slats of a facade louver (1), **characterized in that** the pull head (23) comprises an expanding element (231) and an expandable element (232) having a round cross-section, the elements disposed with respect to each other in a movable manner, such that when the pull head (23) is being pulled with the pulling means (22) inside the pull pipe (13), the expanding element (231) reversibly expands the expandable element (232), wherein the expanding element (231) comprises a conical part (2311) arranged such that the tapered end of the conical part points towards the winch (21) when the pull head (23) is being pulled with the pulling means (22) inside the pull pipe (13), the conical part being thus forced at least partly inside the expandable element (232) so as to reversibly expand the expandable element (232), and wherein the expandable element (232) comprises a sleeve at least partly enclosing the expanding element (231), and the expandable element has an expanding-element-side edge (2321) with cuts (2322) extending from the edge, the cuts allowing the expansion of the expandable element when the conical part (2311) of the expanding element is being forced inside the expandable element.

18. A method for manufacturing a facade louver (1), wherein
at least one hole (12) is machined in slats (11) that have been cut to a predefined size and to the same length, in the same position in each of the slats;
**characterized in that**
the slats (11) are placed in a stand (4) of the arrangement according to claims 1-15, securing the slats by means of end frames (14) that are also placed in the stand and/or by means of slat holders (43) of the stand;
a pull pipe (13) is pushed through the holes (12) arranged in the same position in each of the slats (11), the outer diameter of the pull pipe corresponding to the diameter of the holes (12) in the slats;
by driving a winch (21) in an outward direction, a pull head (23) attached to a pulling means (22) is pushed through the pull pipe (13);
the pull head is pulled through the pull pipe (13) by driving the winch (21) in an inward direction, whereby the pull head (23) expands larger than the inner diameter of the pull pipe (13) so as to expand the pull pipe in the areas between the slats (11), and in the area of the slat to tighten the pipe against the slat, so that the slat is immovably locked around the pull pipe.

## Patentansprüche

1. Anordnung zur Herstellung einer Fassadenjalousie (1), umfassend eine Zahl von parallelen Lamellen (11), die in einem Abstand voneinander beabstandet sind, und wenigstens ein Ziehrohr (13), das sich durch Löcher (12) erstreckt, die in den Lamellen angeordnet sind, um die Lamellen zu verbinden, wobei die Anordnung umfasst:
- eine Zieheinheit (2) zum Expandieren des Ziehrohrs (13) der Jalousie;
- eine Steueranordnung (3) der Zieheinheit; und
- ein Gestell (4) zum Tragen der Fassadenjalousie, die während des Herstellungsprozesses hergestellt wird, wobei die Anordnung **dadurch gekennzeichnet ist, dass**
- die Zieheinheit (2) eine Winde (21), eine Zieheinrichtung (22), die einziehbar mit der Winde verbunden ist, und einen Ziehkopf (23) umfasst, der an der Zieheinrichtung anbringbar ist; und
- die Winde (21) mittels der Steueranordnung (3) der Zieheinheit bewegbar und in Position verriegelbar ist.

2. Anordnung nach Anspruch 1, **dadurch gekennzeichnet, dass** die Steueranordnung (3) der Zieheinheit dazu ausgelegt ist, eine Bewegung der Winde (21) sowohl in eine horizontale als auch in eine vertikale Richtung zu ermöglichen, und/oder dass die Steueranordnung bewegbar an dem Gestell (4) montiert ist.

3. Anordnung nach Anspruch 1 oder 2, **dadurch gekennzeichnet, dass** das Gestell (4) wenigstens einen horizontalen festen Tragbalken (41) umfasst, sowie wenigstens einen horizontal bewegbaren horizontalen Tragbalken (42).

4. Anordnung nach einem der vorhergehenden Ansprüche, **dadurch gekennzeichnet, dass** das Gestell (4) wenigstens zwei horizontal bewegbare Tragbalken (42) umfasst, deren Bewegungsrichtungen zueinander rechtwinklig sind, oder deren Bewegungsrichtungen gleich sind.

5. Anordnung nach einem der vorhergehenden Ansprüche, **dadurch gekennzeichnet, dass** das Gestell (4) wenigstens einen Lamellenhalter (43) zum Definieren des Abstand zwischen den Lamellen und zum Halten der Lamellen während der Herstellung der Jalousie umfasst.

6. Anordnung nach einem der vorhergehenden Ansprüche, **dadurch gekennzeichnet, dass** wenigstens einer der Tragbalken (41, 42) des Gestells (4) 1 bis 5 Meter lang ist.

7. Anordnung nach einem der vorhergehenden Ansprüche, **dadurch gekennzeichnet, dass** die Zieheinheit (2) ein Anschlagselement (24) für das Ziehrohr (13) zum Anschlagen gegen das Ziehrohr umfasst, während der Ziehkopf (23) mit der Zieheinrichtung (22) innerhalb des Ziehrohrs (13) gezogen wird.

8. Anordnung nach einem der vorhergehenden Ansprüche, **dadurch gekennzeichnet, dass** die Zieheinrichtung (22) ein Draht oder ein Metallband ist.

9. Anordnung nach einem der vorhergehenden Ansprüche, **dadurch gekennzeichnet, dass** die Zieheinrichtung (22) dazu ausgelegt ist, so lang zu sein, dass der Ziehkopf (23) um wenigstens 2 m eingezogen werden kann, oder um wenigstens 4 m.

10. Anordnung nach einem der vorhergehenden Ansprüche, **dadurch gekennzeichnet, dass** die Winde (21) eine Windengeschwindigkeitssteuerung (211) umfasst.

11. Anordnung nach einem der vorhergehenden Ansprüche, **dadurch gekennzeichnet, dass** der Ziehkopf (23) am Ende der Zieheinrichtung (22) anbringbar ist.

12. Anordnung nach einem der vorhergehenden Ansprüche, **dadurch gekennzeichnet, dass** der Durchmesser des Ziehkopfs (23) reversibel expandierbar ist.

13. Anordnung nach Anspruch 12, **dadurch gekennzeichnet, dass** der Ziehkopf (23) ein expandierendes Element (231) und ein expandierbares Element (232) mit einem runden Querschnitt hat, wobei die Elemente relativ zueinander in bewegbarer Weise derart angeordnet sind, dass wenn der Ziehkopf (23) mit der Zieheinrichtung (22) innerhalb des Ziehrohrs (13) gezogen wird, das expandierende Element (231) das expandierbare Element (232) reversibel expandiert.

14. Anordnung nach Anspruch 13, **dadurch gekennzeichnet, dass** das expandierende Element (231) einen konischen Teil (2311) umfasst, der derart angeordnet ist, dass das verjüngte Ende des konischen Teils in Richtung der Winde (21) zeigt, wenn der Ziehkopf (23) mit der Zieheinrichtung (22) innerhalb des Ziehrohrs (13) gezogen wird, wobei der konische Teil somit wenigstens teilweise in das expandierbare Element (232) gedrückt wird, um das expandierbare Element (232) reversibel zu expandieren.

15. Anordnung nach Anspruch 14, **dadurch gekennzeichnet, dass** das expandierbare Element (232) eine Hülse umfasst, die wenigstens teilweise das expandierende Element (231) umschließt, und das expandierbare Element einen Rand (2321) an der Seite des expandierenden Elements mit Ausschneidungen (2322) hat, die sich von dem Rand aus erstrecken, wobei die Ausschneidungen die Expansion des expandierbaren Elements ermöglichen, wenn der konische Teil (2311) des expandierenden Elements in das expandierbare Element gedrückt wird.

16. Zieheinheit (2), die dazu konfiguriert ist, in der Anordnung nach einem der Ansprüche 1 bis 15 betrieben zu werden, zum Expandieren eines Ziehrohrs (13), das die Lamellen einer Fassadenjalousie (1) verbindet, **dadurch gekennzeichnet, dass** die Zieheinheit (2) eine Winde (21), eine Zieheinrichtung (22), die einziehbar mit der Winde verbunden ist, und einen Ziehkopf (23) umfasst, der an der Zieheinrichtung anbringbar ist; wobei die Winde mit einer Steueranordnung (3) bewegbar und in Position verriegelbar ist, wobei die Steueranordnung dazu ausgelegt ist, die Bewegung der Winde sowohl in einer horizontalen als auch in einer vertikalen Richtung zu ermöglichen.

17. Ziehkopf (23), der dazu konfiguriert ist, in der Anordnung nach einem der Ansprüche 1 bis 15 betrieben zu werden, zum Expandieren eines Ziehrohrs (13), das die Lamellen einer Fassadenjalousie (1) verbindet, **dadurch gekennzeichnet, dass** der Ziehkopf (23) ein expandierendes Element (231) und ein expandierbares Element (232) mit einem runden Querschnitt umfasst, wobei die Elemente relativ zueinander in einer bewegbaren Weise derart angeordnet sind, dass wenn der Ziehkopf (23) mit der Zieheinrichtung (22) innerhalb des Ziehrohrs (13) gezogen wird, das expandierende Element (231) das expandierbare Element (232) reversibel expandiert, wobei
das expandierende Element (231) einen konischen Teil (2311) umfasst, der derart angeordnet ist, dass das verjüngte Ende des konischen Teils in Richtung der Winde (21) zeigt, wenn der Ziehkopf (23) mit der Zieheinrichtung (2) innerhalb des Ziehrohrs (13) gezogen wird, wobei der konische Teil somit wenigstens teilweise in das expandierbare Element (232) gedrückt wird, um das expandierbare Element (232) reversibel zu expandieren, und wobei
das expandierbare Element (232) eine Hülse umfasst, die wenigstens teilweise das expandierende Element (231) umschließt, und das expandierbare Element einen Rand (2321) an der Seite des expandierenden Elements mit Ausschneidungen (2322) hat, die sich von dem Rand aus erstrecken, wobei die Ausschneidungen die Expansion des expandierbaren Elements ermöglichen, wenn der konische Teil (2311) des expandierenden Elements in das expandierbare Element gedrückt wird.

18. Verfahren zur Herstellung einer Fassadenjalousie (1), wobei wenigstens ein Loch (12) maschinell in Lamellen (11) eingearbeitet wird, die auf eine vordefinierte Größe und auf die gleiche Länge geschnitten worden sind, in der gleichen Position in jeder von den Lamellen;
**dadurch gekennzeichnet, dass**
die Lamellen (11) in einem Gestell (4) der Anordnung nach den Ansprüchen 1 bis 15 platziert werden, und die Lamellen mittels Endrahmen (14) gesichert werden, die ebenfalls in dem Gestell platziert werden, und/oder mittels Lamellenhaltern (43) des Gestells;
ein Ziehrohr (13) durch die Löcher (12) gedrückt wird, die an der gleichen Position in jeder von den Lamellen (11) angeordnet sind, wobei der äußere Durchmesser des Ziehrohrs dem Durchmesser der Löcher (12) in den Lamellen entspricht;
durch Treiben einer Winde (21) in einer Auswärtsrichtung ein Ziehkopf (23), der an einer Zieheinrichtung (22) angebracht ist, durch das Ziehrohr (13) gedrückt wird;
der Ziehkopf durch das Ziehrohr (13) gezogen wird durch Treiben der Winde (21) in einer Einwärtsrichtung, wobei der Ziehkopf (23) stärker expandiert als der innere Durchmesser des Ziehrohrs (13), derart, dass das Ziehrohr in den Gebieten zwischen den Lamellen (11) expandiert, sowie in dem Gebiet der Lamelle zum Befestigen des Rohrs gegen die Lamelle, derart, dass die Lamelle unbeweglich um das Ziehrohr herum verriegelt wird.

## Revendications

1. Agencement pour fabriquer un volet de façade (1) comprenant un certain nombre de lamelles (11) parallèles espacées à une certaine distance les unes des autres, et au moins un tube de traction (13) s'étendant à travers des trous (12) agencés dans les lamelles afin de raccorder les lamelles, l'agencement comprenant :
une unité de traction (2) pour faire subir une expansion au tube de traction (13) du volet ;
un agencement de commande (3) de l'unité de traction ; et
un socle (4) pour supporter le volet de façade qui est fabriqué pendant le processus de fabrication, l'agencement étant **caractérisé en ce que** :
l'unité de traction (2) comprend un treuil (21), un moyen de traction (22) raccordé, de manière rétractable, au treuil, et une tête de traction (23) qui peut être fixée au moyen de traction ; et
le treuil (21) est mobile et verrouillable en place au moyen de l'agencement de commande (3) de l'unité de traction.

2. Agencement selon la revendication 1, **caractérisé en ce que** l'agencement de commande (3) de l'unité de traction est agencé pour permettre le déplacement du treuil (21) à la fois dans les directions horizontale et verticale et/ou **en ce que** l'agencement de commande est monté de manière mobile sur le socle (4).

3. Agencement selon la revendication 1 ou 2, **caractérisé en ce que** le socle (4) comprend au moins une poutre de support fixe horizontale (41) et au moins une poutre de support horizontale horizontalement mobile (42).

4. Agencement selon l'une quelconque des revendications précédentes, **caractérisé en ce que** le socle (4) comprend au moins deux poutres de support horizontalement mobiles (42), dont les directions de déplacement sont en angle droit l'une par rapport à l'autre, ou bien dont les directions de déplacement sont les mêmes.

5. Agencement selon l'une quelconque des revendications précédentes, **caractérisé en ce que** le socle (4) comprend au moins un support de lamelle (43) pour définir la distance entre les lamelles et pour supporter les lamelles pendant la fabrication du volet.

6. Agencement selon l'une quelconque des revendications précédentes, **caractérisé en ce qu'**au moins l'une des poutres de support (41, 42) du socle (4) mesure 1 à 5 mètres de long.

7. Agencement selon l'une quelconque des revendications précédentes, **caractérisé en ce que** l'unité de traction (2) comprend un élément de butée (24) pour le tube de traction (13) pour venir en butée contre le tube de traction alors que la tête de traction (23) est tirée avec le moyen de traction (22) à l'intérieur du tube de traction (13).

8. Agencement selon l'une quelconque des revendications précédentes, **caractérisé en ce que** le moyen de traction (22) est un fil ou une bande métallique.

9. Agencement selon l'une quelconque des revendications précédentes, **caractérisé en ce que** le moyen de traction (22) est agencé afin d'être long de sorte que la tête de traction (23) peut être tirée sur au moins 2 m ou au moins 4 m.

10. Agencement selon l'une quelconque des revendications précédentes, **caractérisé en ce que** le treuil (21) comprend une commande de vitesse de treuillage (211).

11. Agencement selon l'une quelconque des revendications précédentes, **caractérisé en ce que** la tête de traction (23) peut être fixée à l'extrémité du moyen de traction (22).

12. Agencement selon l'une quelconque des revendications précédentes, **caractérisé en ce que** le diamètre de la tête de traction (23) peut subir une expansion, de manière réversible.

13. Agencement selon la revendication 12, **caractérisé en ce que** la tête de traction (23) comprend un élément d'expansion (231) et un élément expansible (232) ayant une section transversale arrondie, les éléments étant disposés les uns par rapport aux autres d'une manière mobile, de sorte que lorsque la tête de traction (23) est tirée avec le moyen de traction (22) à l'intérieur du tube de traction (13), l'élément d'expansion (231) fait subir, de manière réversible, une expansion à l'élément expansible (232).

14. Agencement selon la revendication 13, **caractérisé en ce que** l'élément d'expansion (231) comprend une partie conique (2311) agencée de sorte que l'extrémité progressivement rétrécie de la partie conique est orientée vers le treuil (21) lorsque la tête de traction (23) est tirée avec le moyen de traction (22) à l'intérieur du tube de traction (13), la partie conique étant ainsi forcée au moins partiellement à l'intérieur de l'élément expansible (232) afin de faire subir, de manière réversible, une expansion à l'élément expansible (232).

15. Agencement selon la revendication 14, **caractérisé en ce que** l'élément expansible (232) comprend un manchon enfermant au moins partiellement l'élément d'expansion (231), et l'élément expansible a un bord du côté de l'élément d'expansion (2321) avec des découpes (2322) s'étendant à partir du bord, les découpes permettant l'expansion de l'élément expansible lorsque la partie conique (2311) de l'élément d'expansion est forcée à l'intérieur de l'élément expansible.

16. Unité de traction (2) configurée pour fonctionner dans l'agencement selon l'une quelconque des revendications 1 à 15 pour faire subir une expansion à un tube de traction (13) raccordant les lamelles d'un volet de façade (1), **caractérisée en ce que** l'unité de traction (2) comprend un treuil (21), un moyen de traction (22) raccordé de manière rétractable au treuil, et une tête de traction (23) qui peut être fixée au moyen de traction ; le treuil étant mobile et verrouillable en place avec un agencement de commande (3), dans laquelle l'agencement de commande est agencé pour permettre le déplacement du treuil à la fois dans les directions horizontale et verticale.

17. Tête de traction (23) configurée pour fonctionner dans l'agencement selon l'une quelconque des revendications 1 à 15 pour faire subir une expansion à un tube de traction (13) raccordant les lamelles d'un volet de façade (1), **caractérisée en ce que** la tête de traction (23) comprend un élément d'expansion (231) et un élément expansible (232) ayant une section transversale arrondie, les éléments étant disposés les uns par rapport aux autres d'une manière mobile, de sorte que lorsque la tête de traction (23) est tirée avec le moyen de traction (22) à l'intérieur du tube de traction (13), l'élément d'expansion (231) fait subir, de manière réversible, une expansion à l'élément expansible (232),
dans laquelle :
l'élément d'expansion (231) comprend une partie conique (2311) agencée de sorte que l'extrémité progressivement rétrécie de la partie conique est orientée vers le treuil (21) lorsque la tête de traction (23) est tirée avec le moyen de traction (22) à l'intérieur du tube de traction (13), la partie conique étant ainsi forcée au moins partiellement à l'intérieur de l'élément expansible (232) afin de faire subir, de manière réversible, une expansion à l'élément expansible (232), et dans laquelle :
l'élément expansible (232) comprend un manchon enfermant au moins partiellement l'élément d'expansion (231), et l'élément expansible a un bord du côté de l'élément d'expansion (2321) avec des découpes (2322) s'étendant à partir du bord, les découpes permettant l'expansion de l'élément expansible lorsque la partie conique (2311) de l'élément d'expansion est forcée à l'intérieur de l'élément expansible.

18. Procédé pour fabriquer un volet de façade (1), dans lequel :
au moins un trou (12) est usiné dans les lamelles (11) qui ont été découpées à une taille prédéfinie et à la même longueur, dans la même position dans chacune des lamelles ;
**caractérisé en ce que** :
les lamelles (11) sont placées dans un socle (4) de l'agencement selon les revendications 1 à 15, fixant les lamelles au moyen de bâtis d'extrémité (14) qui sont également placés dans le socle et/ou au moyen de supports de lamelle (43) du socle ;
le tube de traction (13) est poussé à travers les trous (12) agencés dans la même position dans chacune des fentes (11), le diamètre externe du tube de traction correspondant au diamètre des trous (12) dans les lamelles ;
en entraînant un treuil (21) dans une direction vers l'extérieur, une tête de traction (23) fixée à un moyen de traction (22) est poussée à travers le tube de traction (13) ;
la tête de traction est tirée à travers le tube de traction (13) en entraînant le treuil (21) dans une direction vers l'intérieur, moyennant quoi la tête de traction (23) devient plus grande, par expansion, que le diamètre interne du tube de traction (13) afin de faire subir une expansion au tube de traction dans les zones entre les lamelles (11) et dans la zone de la lamelle pour serrer le tube contre la lamelle, de sorte que la lamelle est verrouillée de manière immobile autour du tube de traction.
